# EUROPEAN PATENT APPLICATION

(11) **EP 2 394 506 A1**
(43) Date of publication of application: **14.12.2011**
(21) Application number: 11169628.2
(22) Date of filing: 10.06.2011
(51) Int. Cl.: A01D 90/10

(54) **Self-unloading vehicle with hydraulic system**

(30) Priority: 11.06.2010 AR P000102078
(71) Applicant: Lenarduzzi, Nelson Hector, 5929 Hernando - Provincia de Córdoba (AR); Gonzalez, José Luis, 5929 Hernando - Provincia de Córdoba (AR); Caula, Diego Alejandro, 5929 Hernando - Provincia de Córdoba (AR)
(72) Inventor: Lenarduzzi, Nelson Hector, 5929 Hernando - Provincia de Córdoba (AR); Gonzalez, José Luis, 5929 Hernando - Provincia de Córdoba (AR); Caula, Diego Alejandro, 5929 Hernando - Provincia de Córdoba (AR)
(74) Representative: Robba, Pierpaolo

(57) **Abstract**

Self-unloading vehicle with hydraulic system preferably of the kind to be used for loading and unloading of cereals and grains, of varied density, size and weight. It is possible to use any kind of grains adjusting its unloading thanks to a gate or blade mechanism (3) and to a secondary container (4) located next to the hopper (1) itself, and it is also possible to use said secondary container (4) as an extra storage for a harvester machine. This vehicle comprises a second container (4) situated adjacent to the first container (1), in which wall (1a) there is an unloading mouth (3) for the product. Said unloading mouth (3) faces the entrance mouth of the second container (4) and a means of transportation (5) located in said second container (4); and where said main container (1) articulates according to a shaft (7) transverse to the vehicle situated between the main container (1) and said second container (4), and it has lifting means (2) capable to achieve the articulation movement of lifting and lowering the main container (1).

## Description

### TECHNICAL FIELD OF THE INVENTION

This invention refers to a SELF-UNLOADING VEHICLE WITH HYDRAULIC SYSTEM preferably of the kind to be used for loading and unloading of cereals and grains, of varied density, size and weight. It is possible to use any kind of grains adjusting its unloading thanks to a gate or blade mechanism and to a secondary container located next to the hopper itself, and it is also possible to use said secondary container as an extra storage for a harvester machine.

### STATE OF THE TECHNIQUE AND PROBLEMS TO BE SOLVED

With regard to the state of the technique, the use of the so-called self-unloading hoppers has been known for a long time. Such self-unloading hoppers enable to put a product, grain or cereal, into its container or hopper. The extraction and unloading of the product are carried out where needed with an auger or bucket elevator which is part of said machine.

Within the problems found in said vehicles of the prior art and solved with this invention, lack of the amount adjustment of grain or product to be unloaded can be mentioned. Such adjustment is achieved thanks to the combination between the hydraulic system which provides inclination to the hopper or main container and the gradual opening of a gate or blade which is placed and which covers an opening located on the front wall of said main container or hopper, enabling the work with any type of grains and its use as an extra storage complement for a harvester machine, and therefore the unloading amount of product can be adjusted.

### BRIEF DESCRIPTION OF THE DRAWINGS

In order to understand this invention clearly and to put it into practice without objections, it will be described in detailed with reference to the attached drawings, where:
Figure 1 shows a front right view of the self-unloading vehicle with a hydraulic system, purpose of this invention.
Figure 2 shows a rear view of the self-unloading vehicle with a hydraulic system, purpose of this invention.
Figure 3 shows a front view of the self-unloading vehicle with a hydraulic system, purpose of this invention.
Figure 4 shows a front left view of the self-unloading vehicle with a hydraulic system, purpose of this invention.
Figure 5 is a side view of the vehicle in figure 1.
In all figures, the same reference numbers show equal or corresponding elements.

### DETAILED DESCRIPTION OF THE INVENTION

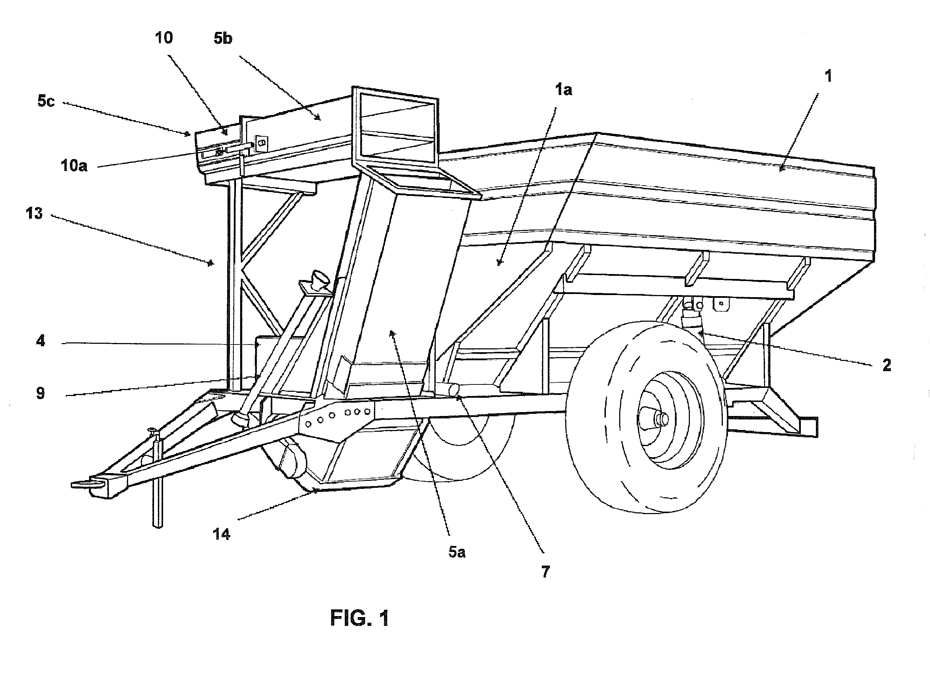

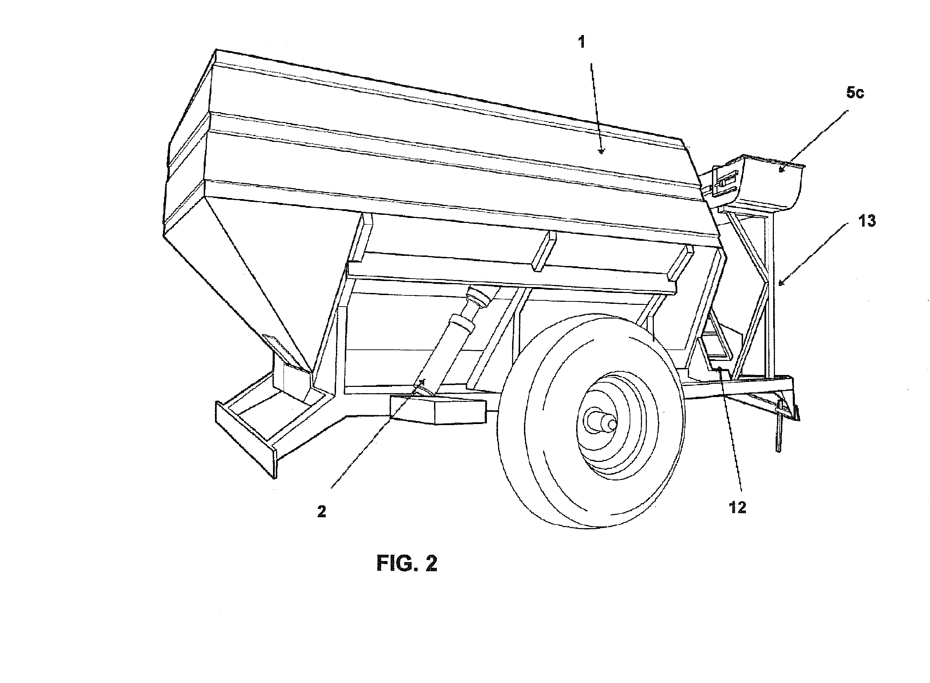

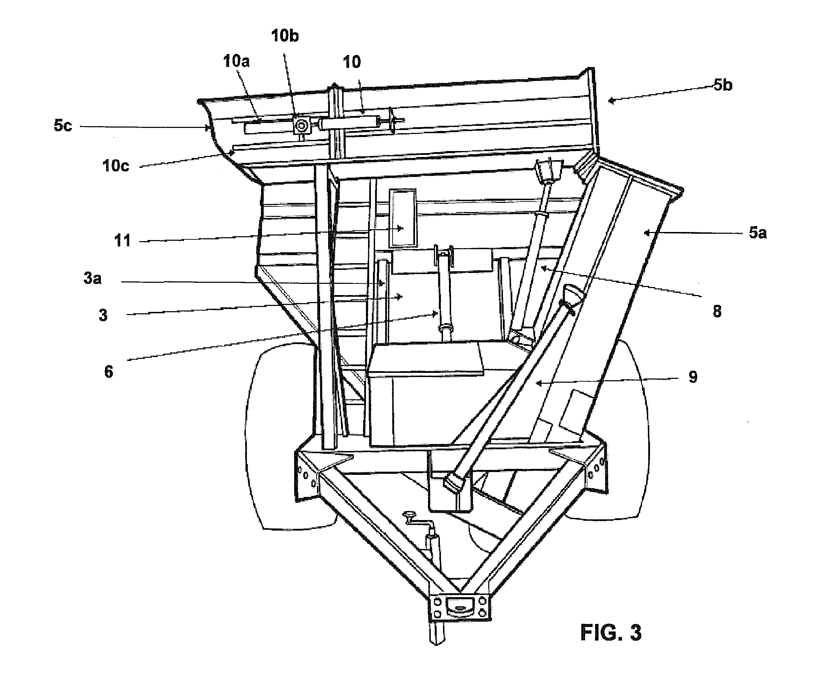

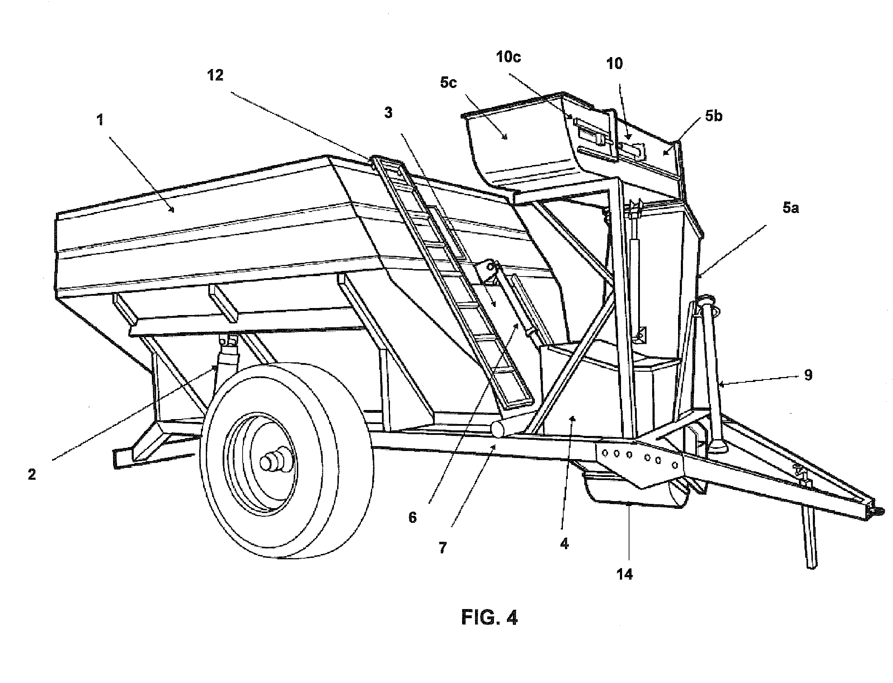

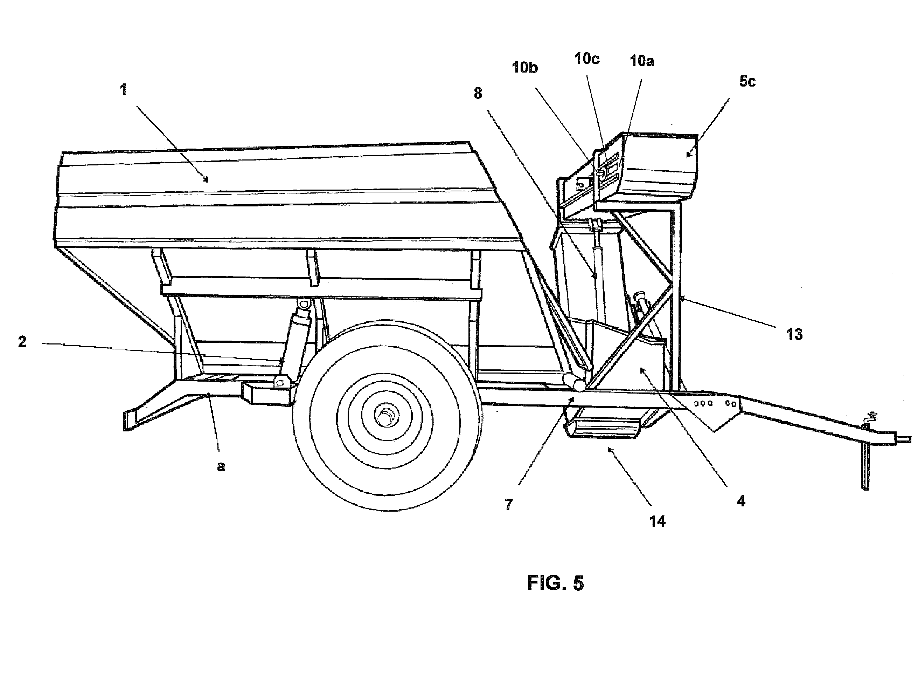

Figures 1 to 5 show that the self-unloading vehicle comprises a hopper or main container 1 with two hydraulic cylinders 2 located at the rear sides of it. Such cylinders are preferably activated by hand, so that said hopper reaches an inclination preferably of up to 60° forward and articulating over the shaft 7. This allows, after opening a gate or blade 3 on the front wall 1a of the hopper 1, to empty the product into a second container 4, which is in front of the lower part of the vehicle and in front of hopper 1 (towards where it is inclined), having said second container 4 a sufficient dimension so that the product that falls into the hopper is distributed by means of a rotating conveyor, bucket elevator kind, or in the case of sowing, by means of a foldable bucket elevator 5 with hydraulic movement for the corresponding final unloading. Said conveyor of a bucket elevator type is in the inside part of articulated hollow arms with rectangular section 5a, 5b and 5c, being leaned on a support column 13 at the moment of moving the vehicle.

A first arm 5a is articulated with the second arm 5b and fixed between themselves by a hydraulic cylinder 8, and where the third arm 5c has a slot in its sides capable of receiving an shaft 10b to which the belt of the bucket elevator 5 is fixed, being said shaft joined to the end of a hydraulic cylinder 10 and its remaining end is fixed to the second arm 5b.

The abovementioned gate or blade 3 is operated by a hydraulic cylinder 6, which can adjust the opening of a gate according to the product (grain) being handled in such a way that the grain falls or unloads into the container 4.

Since the grain or product falls into the container 4, which does not have front wall, thanks to the opening that generates the blade 3 when lifting parallel to the wall 1 a. A bellow-type joint of folding material is in such container or receiving container 4 and in the gate or blade 3, in order to block the spillage of the product or grain by the sides.

The above mentioned hopper 1 has an oscillating or articulating motion over the shaft 7, thanks to the operation of the hydraulic cylinders 2. These hydraulic cylinders, when extended, have a fixed end to said hopper 1 and the other end to the chassis of the machinery, and will consequently produce the lifting of the hopper 1 by one of its ends rotating with respect to shaft 7.

With rotation of the hopper 1, wall 1 a will approach together with the blade or gate 3, which slides over said wall onto guide 3, thanks to a second hydraulic cylinder 6 joined to said blade 3 and to the wall 1 a. When operating said hydraulic cylinder 6, the blade or gate 3 will lift and let the product, cereals or grains, fall towards the second container or front receiving container 4. When such hydraulic cylinder is operated again, the blade 3 will move downward and consequently the opening of the product exit will close.

Once the front container 4 is loaded, the bucket elevator conveyor will be in condition to be operated in order to unload the product from said container 4. It is possible to see a third hydraulic cylinder 8 intended to extend the foldable arms 5a, 5b and 5c of the conveyor bucket elevator

Preferably, a power take-off 9 from the tractor will permit the operating of such bucket elevator with the energy provided by the tractor engine. The belt is operated by means of a power take-off 9 from the tractor through an inverting box and a chain that goes from the pinion of the inverting box to the pinion of the lower roller which makes the belt rotate. A rectangular display 11 located on the front wall 1 a of the main container 1 will allow to observe the load level of said main container 1.

Bucket elevator 5 is foldable, it contains a conveyor belt with double buckets and it is lifted by means of a hydraulic cylinder 8 fixed by its ends to arm 5a and 5b. A third cylinder 10 is between the portion 5b and 5c and this cylinder will be in charge of stretching the belt when the bucket elevator goes up and slackening the belt when the bucket elevator goes down. The slot 10a substantially rectangular with rounded end edges, located at both sides, completes the mechanism of said third cylinder 10 that allows to carry out the stretching and slackening of the bucket elevator belt 5. Cereal will fall inside the second container 4, from the first container or hopper 1 and will go towards the bucket elevator 5. The same container has a lower blade 14 that is used to unload the cereal directly to the floor (or to a storage bin well) and which is opened manually. The bucket elevator end is placed in said second container to unload the product.

One component, not drawn because of practical reasons, is a metallic bellows which is fixed between the main container 1 and the second smaller container 4 in order to prevent the product, grain or cereal, from falling to the sides of the vehicle when the grain is getting out from the mouth opened by the lifted blade and enters the mouth or entrance of the second container 4. Said bellows will preferably be a U-shaped flexible container which will open when the main container 1 moves away from the second container 4, and will close when the main container 1 goes closer to the second container 4. This bellows 4 will prevent the grain from getting through the hole between the unloading mouth of the main container 1 and the entrance mouth of the second container 4.

Blade 3, by means of a bigger or smaller opening, allows to adjust the volume of product, grain or cereal that falls into the container 4. This blade is operated hydraulically by means of the hydraulic cylinder 6 which is fixed to said blade by one end and to the front wall 1 a of the main container 1 by the other end.

The first container or hopper 1 is lifted by two hydraulic cylinders 2, preferably telescopic ones of 45°, or that added to the inclination of the floor of 15° allows obtaining 60° of inclination, appropriate for the cereal to slip towards the second container 4.

With regard to the vehicle working of this invention, its stages are carried out as follows:
a) Filling: Verify that the mobile blade 3 (volume control) is closed (hydraulic cylinder 6 extended) and the lifting bucket elevator 5 is folded (hydraulic cylinder 8 contracted). The filling is produced through the upper part of the hopper or main container 1, where the harvester machine empties its load.
b) Unloading: The vehicle with its main container 1 is placed to a side of the truck. The hydraulic key is placed in the position that extends the hydraulic cylinder 8 in order to prepare the bucket elevator 5, then the hydraulic system of the tractor is turned on and thus the bucket elevator lifts. Now, the trailer vehicle is ready to unload the cereal kept in the hopper or main container 1.
c) Being the mobile blade 3 closed (hydraulic cylinder 6 extended), the power take-off 9 of the tractor is put into movement and the belt of the lifting bucket elevator 5 starts moving. Then the hydraulic key is placed in the position that produces the hydraulic drive of the mobile blade 3 that, when it is opened, lets the cereal go to the second container 4, to be left into the truck by means of the lifting bucket elevator 5.
d) After the blade 3 is operated, the second hydraulic key is operated in order to lift the hopper or main container 1 to empty completely the self-unloading vehicle.
e) When the hopper or main container 1 is totally empty, the power take-off 9 of the tractor turns ff, the container 1 goes down, the mobile blade 3 closes and the folding of the lifting bucket elevator 5 is carried out.
Under these conditions the vehicle is ready to be towed again to the threshing area and to receive a new cereal load in the main container 1.

## Claims

1. Self-unloading vehicle with hydraulic system of the kind which has a main hopper or container (1) for the product, such as grains or cereals, characterized because it comprises a second container (4) situated next to the first container (1), in which wall (1 a) there is an unloading mouth for the product (3). Said unloading mouth faces the entrance mouth of the second container (4) and a means of transportation (5) for the product located in said second container (4); and where said main container (1) articulates according to a shaft (6) transverse to the vehicle situated between the main container (1) and said second container (4), and it has elevation means (2) capable to achieve the articulation movement of lifting and lowering the main container (1).

2. Self-unloading vehicle according to claim 1 characterized because said elevation means (2) are two hydraulic cylinders (2), each of them located at the each side of the main container (1) and are attached to said main container by a fixing end (1) and to the vehicle chassis by the other end.

3. Self-unloading vehicle according to claim 1 characterized because said unloading mouth for the product comprises a blade or gate (3) with sliding movement and parallel to said wall (1 a) of the main container (1), being said blade fixed to an end of the hydraulic cylinder (6), and where the other end of said hydraulic cylinder is fixed to the mentioned frontal wall (1 a) from the main container (1).

4. Self-unloading vehicle according to claim 1 characterized because said means of transportation (5) is a bucket elevator (5) which comprises three arms (5a, 5b, 5c), being the first arm (5a) articulated with the second arm (5b) and fixed between themselves by means of a hydraulic cylinder (8), and where the third arm (5c) has a slot in its sides capable of receiving an shaft (10b) to which the belt of the bucket elevator (5) is fixed, being said shaft joined to the end of a hydraulic cylinder (10) and its remaining end is fixed to the second arm (5b)

5. Self-unloading vehicle according to claim 1 characterized because the end of said means of transportation (5) rests on a supporting column (13).

6. Self-unloading vehicle according to claim 1 characterized because a lower blade is placed below the second container (4) in order to unload grains (14) towards the floor.
